(19) Europäisches Patentamt
European Patent Office
Office européen des brevets

(11) Veröffentlichungsnummer: **0 524 496 B1**

# (12) EUROPÄISCHE PATENTSCHRIFT

(45) Veröffentlichungstag der Patentschrift: **11.10.95**

(51) Int. Cl.[6]: **A01N 37/50**, //(A01N37/50, 43:84,43:40,33:08)

(21) Anmeldenummer: **92111670.3**

(22) Anmeldetag: **09.07.92**

Die Akte enthält technische Angaben, die nach dem Eingang der Anmeldung eingereicht wurden und die nicht in dieser Patentschrift enthalten sind.

## (54) Fungizide Mischung.

(30) Priorität: **22.07.91 DE 4124255**

(43) Veröffentlichungstag der Anmeldung:
**27.01.93 Patentblatt 93/04**

(45) Bekanntmachung des Hinweises auf die Patenterteilung:
**11.10.95 Patentblatt 95/41**

(84) Benannte Vertragsstaaten:
**AT BE CH DE DK ES FR GB GR IT LI NL PT SE**

(56) Entgegenhaltungen:
**EP-A- 0 253 213**
**DE-A- 2 656 747**

(73) Patentinhaber: **BASF Aktiengesellschaft**
**Carl-Bosch-Strasse 38**
**D-67063 Ludwigshafen (DE)**

(72) Erfinder: **Sauter, Hubert, Dr.**
**Neckarpromenade 20**
**W-6800 Mannheim 1 (DE)**
Erfinder: **Schelberger, Klaus**
**Traminerweg 2**
**W-6701 Goennheim (DE)**
Erfinder: **Saur, Reinhold, Dr.**
**Koenigsberger Strasse 9**
**W-6737 Boehl-Iggelheim (DE)**
Erfinder: **Lorenz, Gisela, Dr.**
**Erlenweg 13**
**W-6730 Neustadt (DE)**
Erfinder: **Ammermann, Eberhard, Dr.**
**Von Gagern-Strasse 2**
**W-6148 Heppenheim (DE)**

EP 0 524 496 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft fungizide Mischungen mit synergistischer fungizider Wirkung und Verfahren zur Bekämpfung von Pilzen mit diesen Mischungen.

Es ist bekannt, α-Methoximino-2-[(2-methylphenoxy)-methyl]-phenylessigsäuremethylester

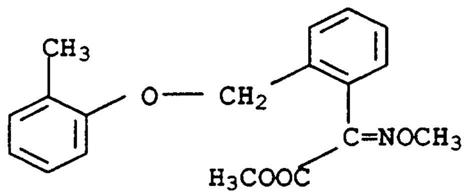

als Fungizid zu verwenden (EP 253 213). Es ist ferner bekannt, den Wirkstoff 4-(2-Methyl-3-[4-tert.-butylphenyl]-propyl)-2,6-dimethylmorpholin

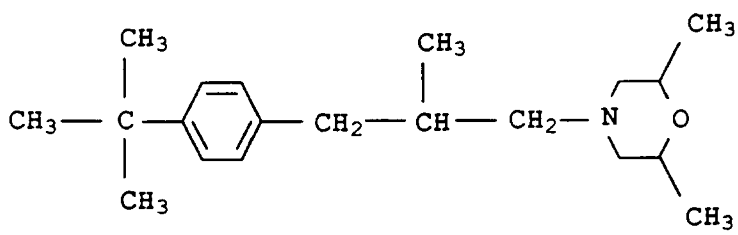

oder den Wirkstoff Tridemorph oder den Wirkstoff Fenpropidin oder deren Salze als Fungizide zu verwenden (DE 26 56 747).

Es wurde nun gefunden, daß eine Mischung aus

a) α-Methoximino-2-[(2-methylphenoxy)-methyl]-phenylessigsäuremethylester

und

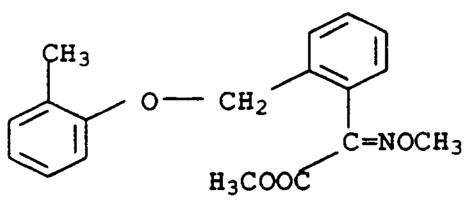

b) 4-(2-Methyl-3-[4-tert.-butylphenyl]-propyl)-2,6-dimethylmorpholin (Fenpropimorph)

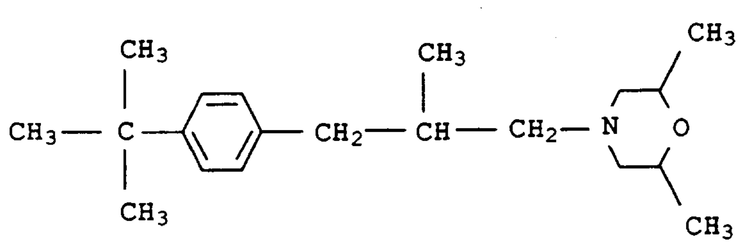

oder dem Wirkstoff Tridemorph oder dem Wirkstoff Fenpropidin eine synergistische fungizide Wirkung hat. Das Mischungsverhältnis (Gewichtsverhältnis) der Verbindungen a) und b) wird so gewählt, daß eine synergistische fungizide Wirkung auftritt, beispielsweise Verbindung a) : Verbindung b) wie 10 : 1 bis 1 : 10, beispielsweise 5 : 1 bis 1 : 5, insbesondere 3 : 1 bis 1 : 3, vorzugsweise 2 : 1 bis 1 : 2. Die

synergistische Wirkung der Mischung zeigt sich darin, daß die fungizide Wirkung der Mischung a) + b) größer ist als die Summe der fungiziden Wirkungen von a) und von b).

Die Komponente a), kann hinsichtlich der -C=N-Doppelbindung in zwei stereoisomeren Formen vorliegen. Bevorzugt ist das (E)-Isomere.

Die Erfindung umfaßt Mischungen, die die reinen Isomeren der Verbindung a) enthalten, insbesondere das (E)-Isomere, als auch Mischungen, die Gemische der Isomeren enthalten.

Die Komponente Fenpropimorph kann in zwei stereoisomeren Formen (Morpholinring) vorliegen, wobei das cis-Isomere bevorzugt wird.

Die Erfindung umfaßt Mischungen, die die reinen Isomeren der Verbindung Fenpropimorph enthalten, insbesondere das cis-Isomere, und Mischungen, die Gemische der Isomeren enthalten.

Bevorzugt werden solche Mischungen, die die Komponente a) überwiegend in Form des (E)-Isomeren enthalten und gleichzeitig die Komponente b) überwiegend als cis-Isomer.

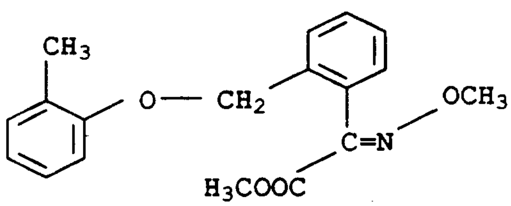

a, (E)-Isomer

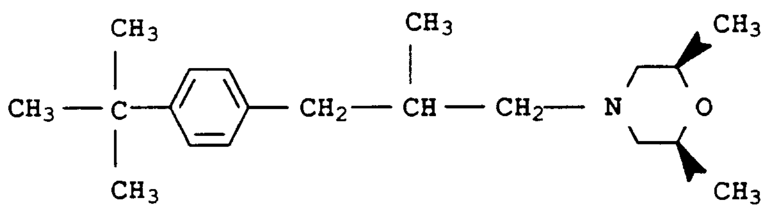

b, cis-Isomer

Der Wirkstoff Fenpropimorph b) kann auch in Form seiner Salze vorliegen. Auch diese Mischungen werden von der Erfindung umfaßt.

Salze werden hergestellt durch Umsetzung mit Säuren z.B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalin-disulfonsäure.

In der Praxis setzt man vorteilhaft die reinen Wirkstoffe a) und b) ein, denen man auch weitere Wirkstoffe wie Insektizide, Akarizide, Nematizide, Herbizide, weitere Fungizide, Wachstumsregulatoren und/oder Düngemittel zufügen kann.

Die erfindungsgemäßen fungiziden Mischungen können beispielsweise in Form von direkt versprühbaren Lösungen, Pulvern, Suspensionen, auch hochprozentigen wäßrigen, öligen oder sonstigen Suspension oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feine Verteilung der erfindungsgemäßen Wirkstoffe gewährleisten.

Normalerweise werden die Pflanzen mit den Mischungen besprüht oder bestäubt oder die Samen der Pflanzen mit den Mischungen behandelt.

Die Formulierungen werden in bekannter Weise hergestellt, z.B. durch Verstrecken der Mischung mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmitteln als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene

und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Mischungen zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Verbindungen werden angewendet, indem man die Pilze oder die vor Pilzbefall zu schützenden Saatgüter, Pflanzen, Materialien oder den Erdboden mit einer fungizid wirksamen Menge der Mischungen behandelt.

Die Anwendung erfolgt vor oder nach der Infektion der Materialien, Pflanzen oder Samen durch die Pilze.

Speziell eignen sich die Mischungen zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Rhynchosporium an Getreide,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die neuen Mischungen können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen der erfindungsgemäßen Mischungen liegen je nach Art des gewünschten Effektes zwischen 0,01 und 3 kg Wirkstoffmischung pro ha.

Bei der Saatgutbehandlung werden im allgemeinen Aufwandmengen der Wirkstoffmischungen von 0,001 bis 50 g, vorzugsweise 0,01 bis 10 g je Kilogramm Saatgut benötigt.

Beispiel 1

Eradikative Wirkung gegen Weizenmehltau

Weizenpflanzen der Sorte "Kanzler" wurden, nachdem sie 3 Blätter entwickelt hatten, in einem Versuch mit Weizenmehltau (Erysiphe graminis var. tritici) behandelt, der gegenüber Fungiziden, die einen Triazolrest im Molekül enthalten, unempfindlich war, und in einem weiteren Versuch mit Weizenmehltau behandelt, der gegenüber Fungiziden, die einen Triazolrest im Molekül enthalten, empfindlich war, und nach der Entwicklung des Pilzbefalls auf 5 % der Blattfläche mit den wäßrigen Wirkstoffaufbereitungen in den angegebenen Konzentrationen behandelt. Die Wassermenge entsprach 400 l/ha. Die Pflanzen wurden im Gewächshaus für 20 Tage bei 18 bis 22 °C kultiviert. Danach erfolgte die Auswertung durch Feststellung der befallenen Blattfläche in Prozent. Diese Werte wurden in Wirkungsgrade umgerechnet. Der Wirkungsgrad in der unbehandelten Kontrolle wurde of 0 festgesetzt. Der Wirkungsgrad, wenn 0 Prozent der Blattfläche von Pilz befallen sind, wurde auf 100 festgesetzt. Die zu erwartenden Wirkungsgrade der Wirkstoffmischung wurden nach der Colby-Formel (Colby, S.R. "Calculating synergistic and antagonistic responses of herbicide combinations", Weeds, 15, S. 20 - 22, 1967) ermittelt und mit den beobachteten Wirkungsgraden verglichen.

Die Werte für die fungizide Wirkung schwanken zwischen den einzelnen Versuchen, weil die Pflanzen in den einzelnen Versuchen unterschiedlich starken Befall aufweisen und dadurch auch die Zahlenwerte der fungiziden Wirkung unterschiedlich ausfallen. Es können daher nur die Ergebnisse innerhalb desselben Versuchs miteinander verglichen werden.

$$\text{Colby-Formel} \quad E = x + y - \frac{x \cdot y}{100}$$

E = zu erwartender Wirkungsgrad, ausgedrückt in % der unbehandelten Kontrolle, beim Einsatz der Wirkstoffe A und B in den Konzentrationen von m und n

X = der Wirkungsgrad, ausgedrückt in % der unbehandelten Kontrolle, beim Einsatz des Wirkstoffes A in einer Konzentration von m

Y = der Wirkungsgrad, ausgedrück in % der unbehandelten Kontrolle, beim Einsatz des Wirkstoffes B in einer Konzentration von n.

Wirkstoff

I. α-Methoximino-2-[(2-Methylphenyl)-oxymethyl]-phenyl-essigsäuremethylester

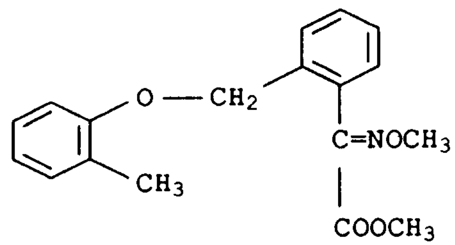

II. Fenpropimorph, 4-[3-(4-tert.-Butylphenyl)-2-methylpropyl]-cis-2,6-dimethylmorpholin

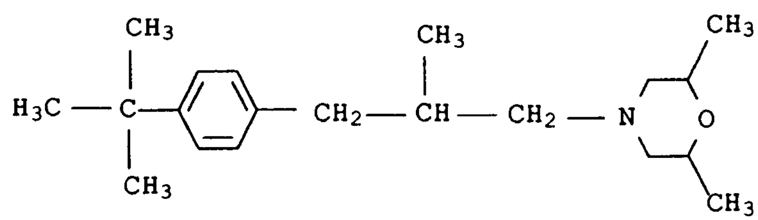

III. Fenpropidin, N-[3-(4-tert.-Butylphenyl)-2-methylpropyl]-piperidin

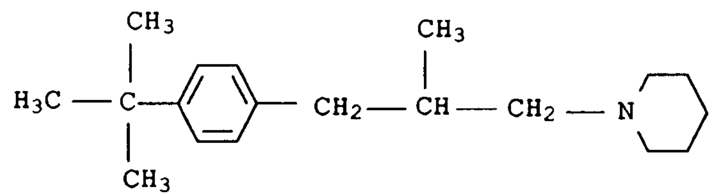

IV. Tridemorph, N-Tridecyl-2,6-dimethyl-morpholin

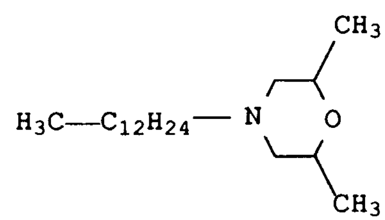

Versuch 1:

Erysiphe graminis-Test (Weizen) eradikativ Erysiphe graminis triazolresistent

| Wirkstoff | Wirkstoffkonzentration in der Spritzbrühe in % | Wirkungsgrad in % der unbehandelten Kontrolle |
|---|---|---|
| Kontrolle (Unbehandelt) | - | 0 |
| I. | 0,05 | 40 |
| II. Fenpropimorph | 0,05 | 20 |
| III. Fenpropidin | 0,05 | 23 |
| IV. Tridemorph | 0,05 | 13 |
| Erfindungsgemäße Mischung | | |
| I. + II. Mischungsverhältnis 1:3 | 0,01 + 0,03 | 83 |
| I. + III. Mischungsverhältnis 1:3 | 0,01 + 0,03 | 89 |
| I. + IV. Mischungsverhältnis 1:3 | 0,01 + 0,03 | 67 |

Das Ergebnis zeigt, daß 0,04 % (0,01 + 0.03) der Mischung eine bessere fungizige Wirkung zeigen als 0,05 % der Einzelwirkstoffe.

Der gleiche Versuch mit triazolsensiblem Erysiphe graminis durchgeführt, bestätigte das oben dargestellte Versuchsergebnis.

Versuch 2:

Erysiphe graminis-Test (Weizen) eradikativ Erysiphe graminis triazolresistent

| Wirkstoff | Wirkstoffkonzentration in der Spritzbrühe in % | Wirkungsgrad in % der unbehandelten Kontrolle |
|---|---|---|
| Kontrolle (Unbehandelt) | - | 0 |
| I. Wirkstoff | 0,1<br>0,001 | 65<br>21 |
| II. Fenpropimorph | 0,1<br>0,01 | 52<br>11 |

| Erfindungsgemäße Mischung | beobachteter Wirkungsgrad | berechneter Wirkungsgrad *) |
|---|---|---|
| I+II 0,01 + 0,01 Mischungsver hältnis 1:1 | 55 | 29,7 |
| I+II 0,1 + 0,1 Mischungsver hältnis 1:1 | 100 | 83,2 |
| I+II 0,1 + 0,01 Mischungsver hältnis 10:1 | 87 | 68,8 |
| I+II 0,01 + 0,1 Mischungsver hältnis 1:10 | 79 | 62,1 |

*) Berechnet nach der Colby-Formel

Die gleichen Versuche mit triazolsensiblem Erysiphe graminis durchgeführt, bestätigte das oben dargestellte Versuchsergebnis.

## Patentansprüche

**1.** Fungizides Mittel, enthaltend eine fungizid wirksame Menge einer Mischung aus

a) α-Methoximino-2-[(2-methylphenoxy)-methyl]-phenylessigsäuremethylester

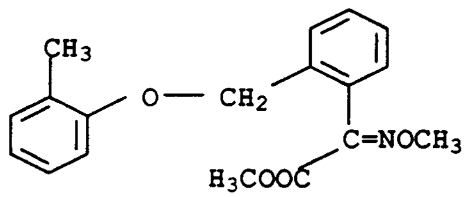

und

b) 4-(2-Methyl-3-[4-tertiärbutylphenyl]-propyl)-2,6-dimethylmorpholin (Fenpropimorph)

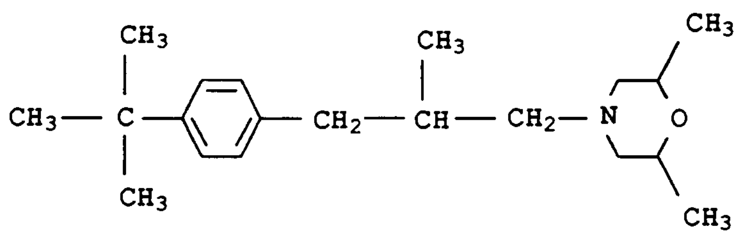

oder dem Wirkstoff Tridemorph oder dem Wirkstoff Fenpropidin.

**2.** Verfahren zur Bekämpfung von Pilzen, dadurch gekennzeichnet, daß man eine fungizid wirksame Menge einer Mischung aus

a) α-Methoximino-2-[(2-methylphenoxy)-methyl]-phenylessigsäuremethylester

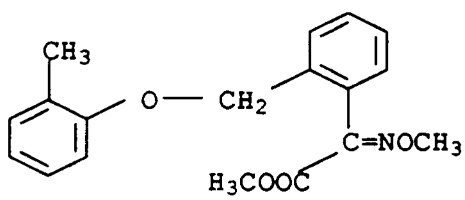

und

b) 4-(2-Methyl-3-[4-tertiärbutylphenyl]-propyl)-2,6-dimethylmorpholin

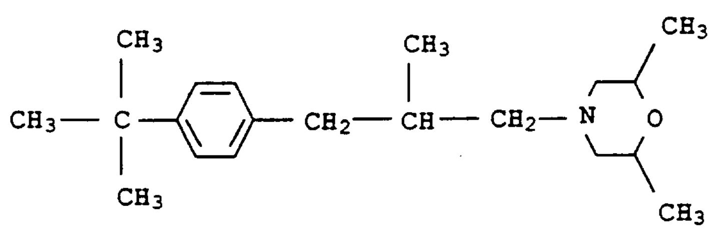

oder dem Wirkstoff Tridemorph oder dem Wirkstoff Fenpropidin auf die Pilze oder auf die durch Pilzbefall bedrohten Materialien, Flächen, Pflanzen oder Saatgüter einwirken läßt.

3. Fungizid gemäß Anspruch 1, enthaltend die Verbindungen a) und b) in einer eine synergistische Fungizidwirkung erzeugenden Menge.

4. Fungizid gemäß Anspruch 1, enthaltend die Verbindungen a) und b) im Gewichtsverhältnis a : b wie 10 : 1 bis 1 : 10.

**Claims**

1. A fungicide containing a fungicidal amount of a mixture of
a) methyl α-methoximino-2-[(2-methylphenoxy)-methyl]-phenylacetate

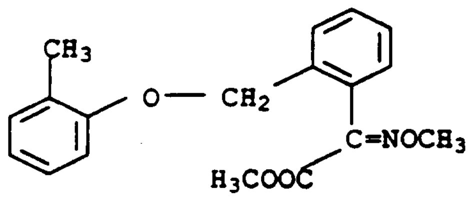

and
b) 4-(2-methyl-3-[4-tert-butylphenyl]-propyl)-2,6-dimethylmorpholine (fenpropimorph)

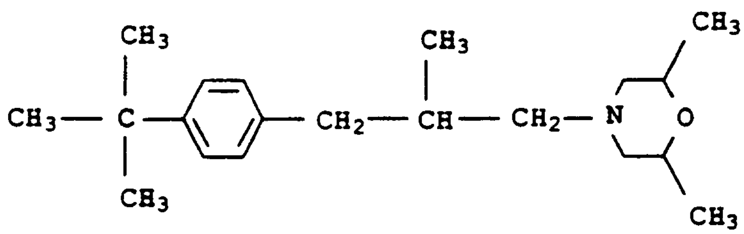

or the active ingredient tridemorph or the active ingredient fenpropidin.

2. A method for controlling fungi, wherein a fungicidal amount of a mixture of
a) methyl α-methoximino-2-[(2-methylphenoxy)-methyl]-phenylacetate

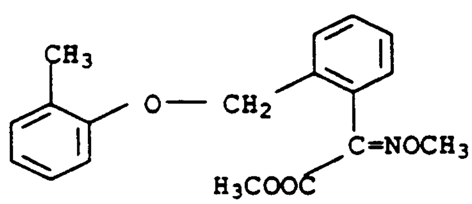

and
b) 4-(2-methyl-3-[4-tert-butylphenyl]-propyl)-2,6-dimethylmorpholine

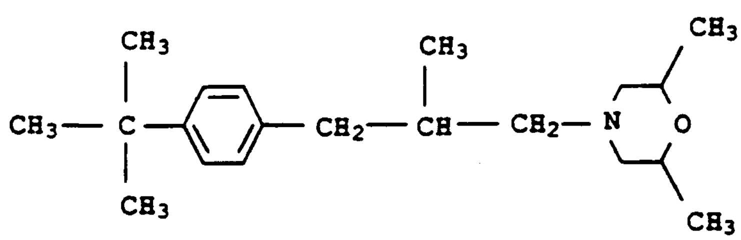

or the active ingredient tridemorph or the active ingredient fenpropidin, is allowed to act on the fungi

or on the materials, areas, plants or seeds threatened by fungal attack.

3. A fungicide as claimed in claim 1, containing the compounds a) and b) in an amount having a synergistic fungicidal action.

4. A fungicide as claimed in claim 1, containing the compounds a) and b) in a weight ratio a : b of from 10 : 1 to 1 : 10.

**Revendications**

1. Fongicide, contenant une quantité à activité fongicide d'un mélange composé
   a) d'α-méthoximino-2-[(2-méthylphénoxy)-méthyl]-phénylacétate de méthyle

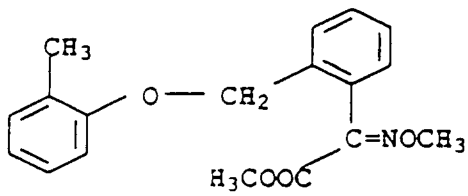

   et
   b) de 4-(2-méthyl-3[4-ter-butylphényl]-propyl)-2,6-diméthylmorpholine (fenpropimorphe)

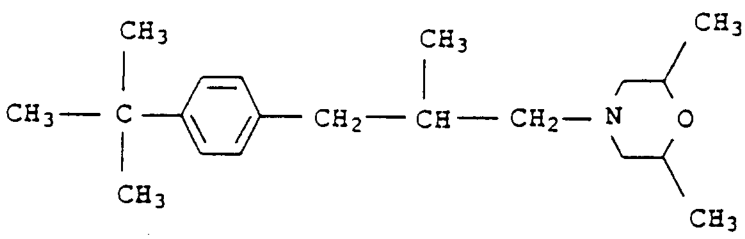

   ou du principe actif tridémorphe ou du principe actif fénpropidine.

2. Procédé de lutte contre les champignons, caractérisé par le fait que l'on fait agir sur les champignons ou les matériaux, surfaces, plantes ou semences menacés par l'attaque par les champignons, une quantité à effet fongicide d'un mélange composé
   a) d'α-méthoximino-2-[(2-méthylphénoxy)-méthyl]-phénylacétate de méthyle

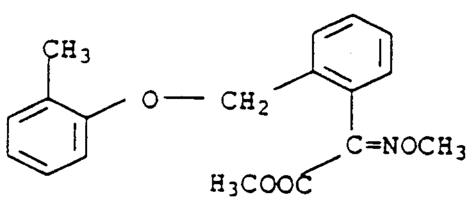

   et

b) de 4-(2-méthyl-3[4-ter-butylphényl]-propyl)-2,6-diméthylmorpholine

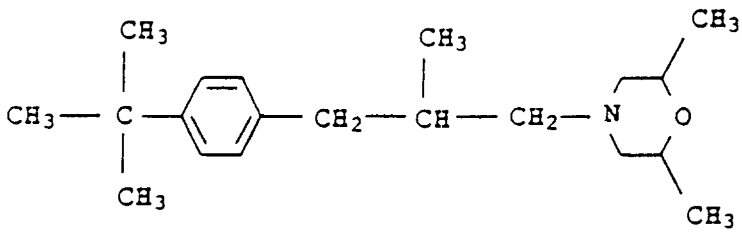

ou du principe actif tridémorphe ou du principe actif fénpropidine.

**3.** Fongicide selon la revendication 1, contenant les composés a) et b) en une quantité produisant un effet fongicide synergique.

**4.** Fongicide selon la revendication 1, contenant les composés a) et b) en un rapport en poids a/b compris entre 10/1 et 1/10.